(19)

**Europäisches Patentamt**
**European Patent Office**
**Office européen des brevets**

(11)  **EP 3 079 411 B1**

(12)  # EUROPEAN PATENT SPECIFICATION

(45) Date of publication and mention
of the grant of the patent:
**10.04.2019 Bulletin 2019/15**

(21) Application number: **14867592.9**

(22) Date of filing: **03.12.2014**

(51) Int Cl.:
**H04W 48/20** *(2009.01)*     **H04W 24/00** *(2009.01)*

(86) International application number:
**PCT/KR2014/011756**

(87) International publication number:
**WO 2015/084046 (11.06.2015 Gazette 2015/23)**

(54) **CELL SELECTION METHOD AND MEASUREMENT DEVICE FOR CELL RESELECTION**

ZELLAUSWAHLVERFAHREN UND VORRICHTUNG ZUR ZELLAUSWAHL

PROCÉDÉ DE SÉLECTION DE CELLULE ET DISPOSITIF DE MESURE POUR UNE RESÉLECTION DE CELLULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2013 IN 5595CH2013**

(43) Date of publication of application:
**12.10.2016 Bulletin 2016/41**

(73) Proprietor: **LG Electronics Inc.**
**Seoul 07336 (KR)**

(72) Inventors:
• **JUNG, Sunghoon**
**Seoul 137-893 (KR)**
• **ABRAHAM, Aby Kanneath**
**Seoul 137-893 (KR)**

(74) Representative: **Cabinet Plasseraud**
**66, rue de la Chaussée d'Antin**
**75440 Paris Cedex 09 (FR)**

(56) References cited:
**EP-A2- 2 640 134**     **KR-A- 20100 016 463**
**KR-A- 20100 050 536**     **KR-A- 20130 093 157**
**US-A1- 2011 319 080**     **US-A1- 2012 322 447**
**US-A1- 2013 121 309**

**Description**

**BACKGROUND OF THE INVENTION**

Field of the invention

The present invention relates to wireless communication and, more particularly, to a cell selection method and a measurement method for a cell reselection.

Related Art

3GPP (3rd Generation Partnership Project) LTE (long term evolution) which is improvement of UMTS (Universal Mobile Telecommunications System) has been introduced as 3GPP release 8. The 3GPP LTE uses OFDMA (orthogonal frequency division multiple access) in a downlink, and uses SC-FDMA (Single Carrier-frequency division multiple access) in an uplink. The 3GPP LTE adopts MIMO (multiple input multiple output) having maximum four antennas. Recently, a discussion of 3GPP LTE-A (LTE-Advanced) which is the evolution of the 3GPP LTE is in progress.

Meanwhile, in the 3GPP system, handover refers to the process of transferring a user equipment in communication in a current cell to another cell, and cell reselection refers to the process of transferring a user equipment in idle state in a current cell to another cell.

In recent years, machine-type communication (MTC), which is communication between devices or between a device and a server via no human interaction, that is, without human intervention, is actively under research. MTC is expected to use low traffic as compared with human-to-human communication.

Thus, unlike general communication devices, MTC devices may be provided with services from a cell which even has low quality. However, it may be inefficient to apply conventional cell selection and cell reselection methods to the MTC devices.

US 2011/319080 A1 discloses a method of cell reselection which comprises measuring, while a mobile station is camped on a network cell, signals of neighboring network cells irrespective of a signal strength and a signal quality of the network cell, and performing a cell reselection of the mobile station if a cell reselection criterion is fulfilled according to a result of the measuring.

US 2013/121309 A1 discloses a method for low-cost MTC devices, which includes broadcasting, in a system information, a first information used for cell re-selection, and providing a second information, for a neighboring cell or a frequency, that is used for cell reselection

**SUMMARY OF THE INVENTION**

An aspect of the present invention is to improve a cell selection procedure and a cell reselection procedure.

To achieve the objective above, according to one embodiment of the present invention, there is provided a method for performing a cell selection as defined in claim 1. Embodiments of the method are further defined in claims 2-4..

To achieve the objective above, according to one embodiment of the present invention, there is provided a device as defined in claim 5. Embodiments of the device are further defined in claims 6-8.

According to one aspect of the present invention, since the number of cell selection and reselection times is decreased as compared with a convention method, a device may stay in a camp-on cell for a longer time. Further, according to one aspect of the present invention, the number of measurement times for cell selection and reselection is reduced to prevent waste of a battery. In addition, according to one aspect of the present invention, performance of a circuit switching fallback (CSFB) is improved and call success rate is increased. Also, call connection speed is improved.

**BRIEF DESCRIPTION OF THE DRAWINGS**

FIG. 1 illustrates a wireless communication system to which the present invention is applied.
FIG. 2 is a block diagram illustrating a radio protocol architecture for a user plane.
FIG. 3 is a block diagram illustrating a radio protocol architecture for a control plane.
FIG. 4 illustrates a state transition process in an RRC idle state.
FIG. 5 is a flowchart illustrating a process in which a UE in an idle state selects a cell.
FIG. 6 is a flowchart illustrating a cell reselection process illustrated in FIG. 5 in detail.
FIG. 7 is a flowchart illustrating a process of performing inter-RAT cell reselection and inter-frequency cell reselection.
FIG. 8 illustrates an example of MTC.

FIGS. 9a to 9c illustrate examples of a method according to one embodiment of the present invention.

FIG. 10a illustrates an operation according to a conventional technology, and FIG. 10b illustrates an example of applying the embodiment.

FIG. 11a illustrates another operation according to a conventional technology, and FIG. 11b illustrates an example of applying the embodiment.

FIG. 12 is a block diagram illustrating a wireless communication system according to an embodiment of the present invention.

## DESCRIPTION OF EXEMPLARY EMBODIMENTS

The technical terms used herein are used to merely describe specific embodiments and should not be construed as limiting the present invention. The scope of the invention is defined by the appended claims.

The expression of the singular number in the specification includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the specification, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the invention readily understood, but not should be intended to be limiting of the invention. It should be understood that the scope of the invention is defined by the appended claims.

In what follows, though a terminal is disclosed, the terminal may be called a User Equipment (UE), Mobile Equipment (ME), Mobile Station (MS), User Terminal (UT), Subscriber Station (SS), wireless device, handheld device, or Access Terminal (AT). Also, the terminal can be a portable device equipped with a communication function, such as a mobile phone, PDA, smart phone, wireless modem, or notebook. At the same time, the terminal can be an immovable device such as a PC or a vehicle-mounted device.

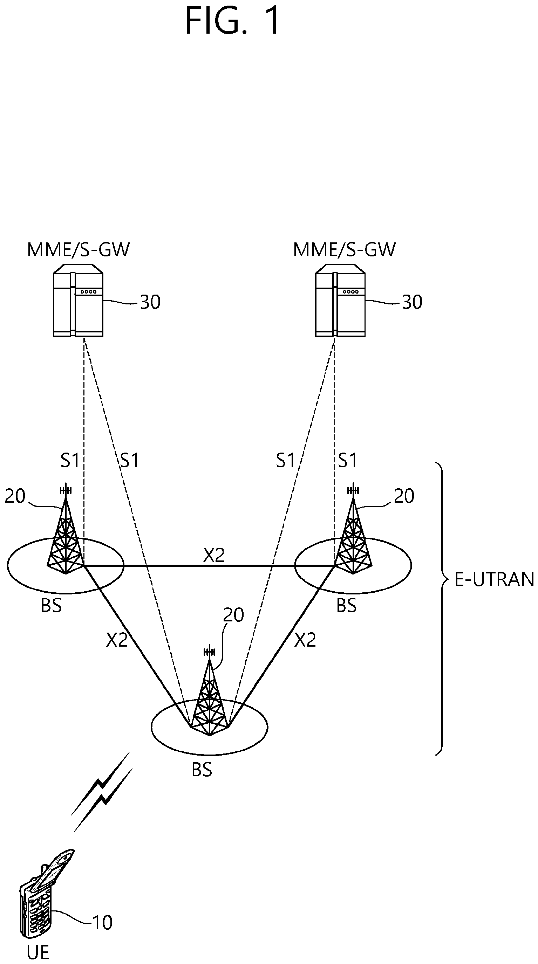

FIG. 1 illustrates a wireless communication system to which the present invention is applied.

The wireless communication system may be called an evolved-UMTS terrestrial radio access network (E-UTRAN), or a long term evolution (LTE)/LTE-A system.

The E-UTRAN includes a base station (BS) 20 which provides a control plane and a user plane to user equipment (UE) 10. The UE 10 may be fixed or have mobility, and may be referred to as other terms such as a mobile station (MS), a user terminal (UT), a subscriber station (SS), a mobile terminal (MT), and a wireless device. The BS 20 generally represents a fixed station that communicates with the UE 10 and may be referred to as other terms such as an evolved-NodeB (eNB), a base transceiver system (BTS), and an access point.

The BSs 20 may be connected to each other through an X2 interface. The BS 20 is connected with an evolved packet core (EPC) 30 through an S1 interface, and more particularly, connected with a mobility management entity (MME) through an S1-MME and a serving gateway (S-GW) through an S1-U.

The EPC 30 is constituted by the MME, the S-GW, and a packet data network-gateway (P-GW). The MME has access information of the UE or information regarding capacity of the UE, and the information is frequently used in mobility management of the UE. The S-GW is a gateway having the E-UTRAN as an end point, and the P-GW is a gateway having the PDN as an end point.

Layers of a radio interface protocol between the UE and the network may be divided into a first layer L1, a second layer L2, and a third layer L3 based on three lower layers of an open system interconnection (OSI) standard model which is widely known in the communication system, and among them, a physical layer to which the first layer belongs provides an information transfer service using a physical channel, and a radio resource control (RRC) layer positioned on the third layer serves to control a radio resource between the UE and the network. To this end, the RRC layer exchanges an RRC message between the UE and the network.

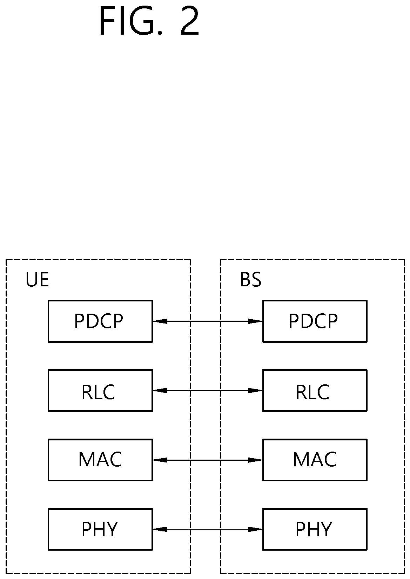

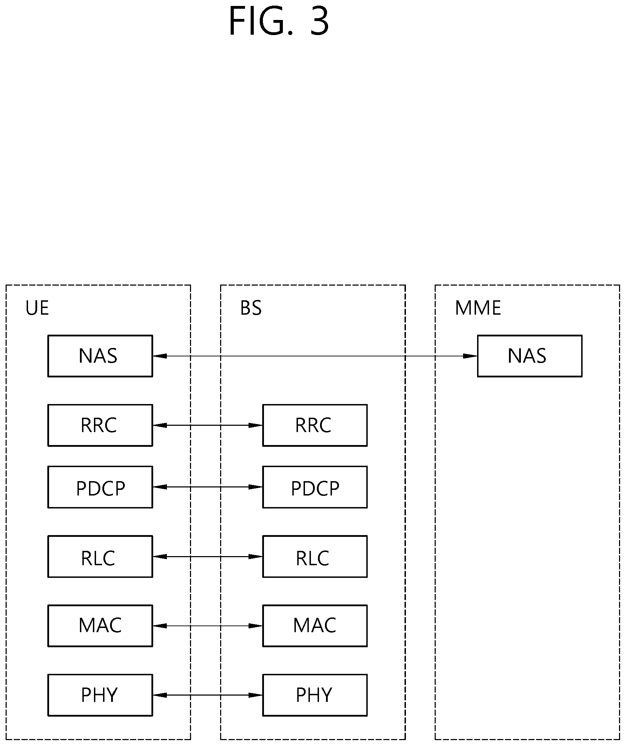

FIG. 2 is a block diagram illustrating a radio protocol architecture for a user plane. FIG. 3 is a block diagram illustrating a radio protocol architecture for a control plane.

The user plane is a protocol stack for user data transmission, and the control plane is a protocol stack for control signal transmission.

Referring to FIGS. 2 and 3, a physical (PHY) layer provides an information transfer service to an upper layer by using a physical channel. The PHY layer is connected with a medium access control (MAC) layer which is the upper layer through a transport channel. Data move between the MAC layer and the PHY layer through the transport channel. The transport channel is classified according to how the data is transmitted through a radio interface with any characteristic.

The data move between different PHY layers, that is, the PHY layers of the transmitter and the receiver through the physical channel. The physical channel may be modulated by an orthogonal frequency division multiplexing (OFDM) scheme, and use a time and a frequency as the radio resource.

A function of the MAC layer includes mapping between a logical channel and a transport channel and multiplexing/demultiplexing to a transport block provided to the physical channel on the transport channel of a MAC service data unit (SDU) which belongs to the logical channel. The MAC layer provides a service to a radio link control (RLC) layer through the logical channel.

A function of the RLC layer includes concatenation, segmentation, and reassembly of the RLC SDU. In order to secure various quality of services (QoS) required by a radio bearer (RB), an RLC layer provides three operation modes of a transparent mode (TM), an unacknowledged mode (UM), and an acknowledged mode (AM). The AM RLC provides an error correction through an automatic repeat request (ARQ).

The radio resource control (RRC) layer is defined only in the control plane. The RRC layer is related with configuration, re-configuration, and release of the RBs to serve to control the logical channel, the transport channel, and the physical channels. The RB means a logic path provided by a first layer (PHY layer) and a second layer (MAC layer, RLC layer, or PDCP layer) in order to transfer the data between the UE and the network.

A function of a packet data convergence protocol (PDCP) layer in the user plane includes transfer, header compression, and ciphering of the user data. A function of the PDCP layer in the control plane includes transfer and ciphering/integrity protection of control plane data.

The configuration of the RB means a process of defining characteristics of the radio protocol layer and the channel in order to provide a specific service and configuring each detailed parameter and operation method. The RB may be divided into a signaling RB (SRB) and a data RB (DRB) again. The SRB is used as a path for transmitting an RRC message in the control plane, and the DRB is used as a path for transporting user data in the user plane.

When RRC connection is established between the RRC layer of the UE and the RRC layer of the E-UTRAN, the UE is in an RRC connected state, and if not, the UE is in an RRC idle state.

A downlink transport channel for transporting the data to the UE from the network includes a broadcast channel (BCH) for transporting system information and a downlink shared channel (SCH) for transporting user traffic or a control message. The traffic or the control message of a downlink multicast or broadcast service may be transported through the downlink SCH, or may be transported through a separate downlink multicast channel (MCH). Meanwhile, an uplink transport channel for transporting the data from the UE to the network includes a random access channel (RACH) for transporting an initial control message and an uplink shared channel (SCH) for transporting the user traffic or the control message in addition to the RACH.

A logical channel which is above the transport channel and mapped in the transport channel includes a broadcast control channel (BCCH), a paging control channel (PCCH), a common control channel (CCCH), a multicast control channel (MCCH), a multicast traffic channel (MTCH), and the like.

The physical channel is constituted by several OFDM symbols in a time domain and several sub-carriers in a frequency domain. One sub-frame is constituted by a plurality of OFDM symbols in the time domain. The RB as a resource allocation unit is constituted by a plurality of OFDM symbols and a plurality of sub-carriers. Further, each sub-frame may use specific sub-carriers of specific OFDM symbols (for example, first OFDM symbols) of the corresponding sub-frame for the physical downlink control channel (PDCCH), that is, a L1/L2 control channel. A transmission time interval (TTI) is a unit time of sub-frame transmission.

Hereinafter, an RRC state of the UE and an RRC connection method will be described.

The RRC state means whether the RRC layer of the UE is logical-connected with the RRC layer of the E-UTRAN or not, and a case where the RRC layer of the UE is connected with the RRC layer of the E-UTRAN is called a RRC connection state, and a case where the RRC layer of the UE is not connected with the RRC layer of the E-UTRAN is called an RRC idle state. Since the RRC connection exists in the UE in the RRC connection state, the E-UTRAN may determine the existence of the corresponding UE in a cell unit, and as a result, the UE may be efficiently controlled. On the other hand, the UE in the RRC idle state may not be determined by the E-UTRAN, and a core network (CN) is managed by a tracking area unit which is a larger area unit than the cell. That is, in the UE in the RRC idle state, only the existence is determined by a large area unit, and the UE needs to move in the RRC connection state in order to receive a general mobile communication service such as voice or data.

When the user first turns on the power of the UE, the UE first searches a proper cell and then stays in the RRC idle state in the corresponding cell. The UE in the RRC idle state establishes the RRC connection with the E-UTRAN through an RRC connection procedure only when the RRC connection is required, and is transited into the RRC connection state. There are several cases where the UE in the RRC idle state requires the RRC connection, and for example, uplink data transmission is required due to reasons such as user's call attempt, or a response message to a case where a paging message is received from the E-UTRAN is transmitted.

A non-access stratum (NAS) layer positioned above the RRC layer performs functions such as a session management and a mobility management.

In the NAS layer, in order to manage mobility of the UE, two states of EDEPS mobility management-REGISTERED (EMM-REGISTER) and EMM-DEREGISTERED are defined, and the two states are applied to the UE and the MME. The initial UE is in the EMM-DEREGISTERED state, and the UE performs a procedure of registering the UE in the corresponding network through an initial attaching procedure so as to be connected to the network. When the attaching procedure is successfully performed, the UE and the MME are in the EMM-REGISTERED state.

In order to manage signaling connection between the UE and the EPS, two states of an EPS connection management (ECM)-IDLE state and an ECM-CONNECTED state, and the two states are applied to the UE and the MME. When the UE in the ECM-IDLE state is RRC-connected with the E-UTRAN, the corresponding UE becomes in the ECM-CONNECTED state. When the MME in the ECM-IDLE state is SI-connected with the E-UTRAN, the corresponding MME becomes in the ECM-CONNECTED state. When the UE is in the ECM-IDLE state, the E-UTRAN does not have context information of the UE. Accordingly, the UE in the ECM-IDLE state performs a procedure related with the mobility based on the UE such as cell selection or cell reselection without receiving a command of the network.

On the contrary, when the UE is in the ECM-CONNECTED state, the mobility of the UE is managed by the command of the network. When a position of the UE in the ECM-IDLE state is different from a position which is known to the network, the UE notifies the corresponding position of the UE to the network through a tracking area updating (TAU) procedure.

Next, the system information will be described.

System information includes essential information that needs to be known by UE in order for the UE to access a BS. Accordingly, the UE needs to have received all pieces of system information before accessing the BS, and needs to always have the up-to-date system information. Furthermore, the BS periodically transmits the system information because the system information is information that needs to be known by all UEs within one cell.

In accordance with Paragraph 5.2.2 of 3GPP TS 36.331 V8.7.0 (2009-09) "Radio Resource Control (RRC); Protocol specification (Release 8)", the system information is classified into a Master Information Block (MIB), a Scheduling Block (SB), and a System Information Block (SIB). The MIB informs UE of the physical configuration of a corresponding cell, for example, a bandwidth. The SB informs UE of information about the transmission of SIBs, for example, a transmission cycle. The SIB is a set of pieces of correlated system information. For example, a specific SIB includes only information about surrounding cells, and a specific SIB includes only information about an uplink radio channel used by UE.

In general, service that is provided to UE by a network may be classified into three types as follows. Furthermore, the UE differently recognizes the type of cell depending on what service may be provided to the UE. In the following description, a service type is first described, and the type of cell is described.

1) Limited service: this service provides emergency calls and an Earthquake and Tsunami Warning System (ETWS), and may be provided by an acceptable cell.
2) Suitable service: this service means public service for common uses, and may be provided by a suitable cell (or a normal cell).
3) Operator service: this service means service for communication network operators. This cell may be used by only communication network operators, but may not be used by common users.

In relation to a service type provided by a cell, the type of cell may be classified as follows.

1) An acceptable cell: this cell is a cell from which UE may be provided with limited service. This cell is a cell that has not been barred from a viewpoint of corresponding UE and that satisfies the cell selection criterion of the UE.
2) A suitable cell: this cell is a cell from which UE may be provided with suitable service. This cell satisfies the conditions of an acceptable cell and also satisfies additional conditions. The additional conditions include that the suitable cell needs to belong to a Public Land Mobile Network (PLMN) to which corresponding UE may access and that the suitable cell is a cell on which the execution of a tracking area update procedure by the UE is not barred. If a corresponding cell is a CSG cell, the cell needs to be a cell to which UE may access as a member of the CSG.

3) A barred cell: this cell is a cell that broadcasts information indicative of a barred cell through system information.
4) A reserved cell: this cell is a cell that broadcasts information indicative of a reserved cell through system information.

Now, measurement and a measurement report are described below.

In a mobile communication system, to support the mobility of UE is essential. Accordingly, the UE continues to measure the quality of a serving cell from which the UE is now provided with service and the quality of a neighbouring cell. The UE reports measured results to a network on a proper time, and the network provides optimum mobility to the UE through handover, etc. In general, measurement for this purpose is called a Radio Resource Management (RRM) measurement.

In order to provide information that may help an operator to operate a network in addition to the mobility support object, UE may perform measurement for a specific object set by the network, and may report measured results thereof to the network. For example, UE receives the broadcast information of a specific cell that has been determined by the network. The UE may report the cell identity (this is also called a global cell identity) of the specific cell, identity information about the location to which the specific cell belongs (e.g., Tracking Area Code) and/or other pieces of cell information (e.g., whether or not it is a member of a Closed Subscriber Group (CSG) cell) to the serving cell.

If UE checks that the quality of a specific area is very poor through measurement while moving, the UE may report location information and measured results for cells having poor quality to a network. A network may perform network optimization based on the reports of the measured results of UEs that help the operation of the network.

In a mobile communication system in which frequency reuse (frequency reuse factor) is 1, mobility is chiefly performed between difference cells that belong to the same frequency band. Accordingly, in order to well guarantee the mobility of UE, the UE needs to well measure the quality of neighbouring cells having the same center frequency as a serving cell and information about the cells. As described above, the measurement of a cell having the same center frequency as a serving cell is called intra-frequency measurement. UE performs intra-frequency measurement and reports measured results thereof to a network on a proper time so that the object of corresponding measured results is achieved.

A mobile communication operator may operate a network using a plurality of frequency bands. If the service of a communication system is provided through a plurality of frequency bands, in order to guarantee optimum mobility for UE, the UE needs to well measure the quality of neighbouring cells having center frequencies from the center frequency of a serving cell and information about the cells. As described above, the measurement of a cell having a center frequency different from the center frequency of a serving cell is called inter-frequency measurement. UE needs to be able to perform inter-frequency measurement and to report measured results thereof to a network on a proper time.

If UE supports the measurement of a heterogeneous network, the UE may measure the cell of a heterogeneous network according to a BS configuration. The measurement of such a heterogeneous network is called inter-Radio Access Technology (RAT) measurement. For example, RAT may include an UMTS Terrestrial Radio Access Network (UTRAN) and a GSM EDGE Radio Access Network (GERAN) that comply with the 3GPP standard, and may also include CDMA 2000 systems that comply with the 3GPP2 standard.

In what follows, with reference to the 3GPP TS 36.304 V8.8.0 (2009-12) "User Equipment (UE) procedures in idle mode (Release 8)", a procedure for a UE to select a cell will be described in detail.

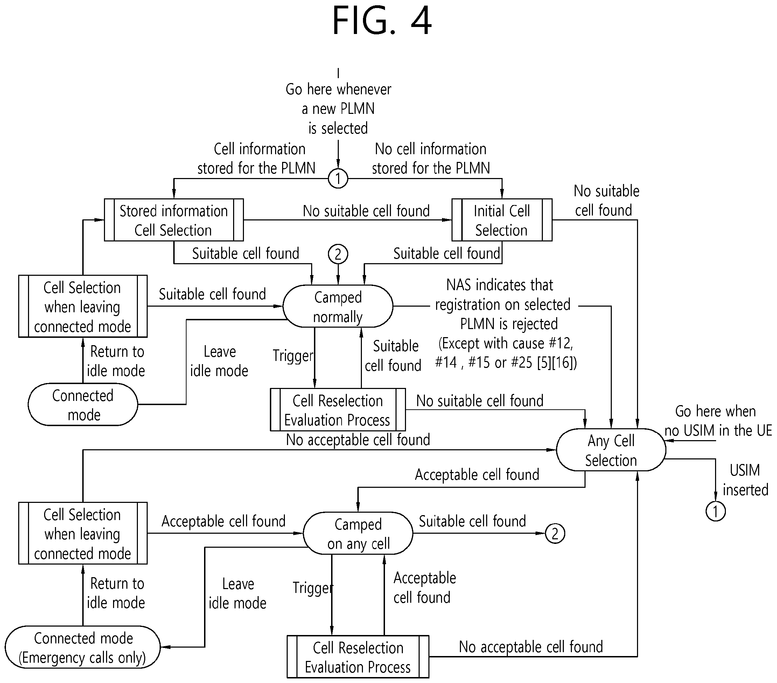

FIG. 4 illustrates a state transition process in an RRC idle state.

As illustrated, a cell selection procedure is performed, starting from number 1 whenever a PLMN is selected. Here, a UE may perform a measurement procedure for cell selection (or cell reselection).

The UE may select a suitable cell based on measurement in the idle mode and cell selection criteria. To promptly perform the cell selection procedure, cell information stored with respect to a plurality of RATs may be used.

When the UE normally camps on the suitable cell, the UE may periodically retrieve a better cell according to cell reselection criteria. If a better cell is discovered, the UE may reselect and camp on the better cell.

After camping on the cell, the UE enters an RRC connection mode to acquire system information from the cell and changes to an RRC idle state. When the UE changes to the RRC idle state out of the RRC connection mode, the UE repeats the cell selection procedure.

Hereinafter, the cell selection procedure will be described in detail.

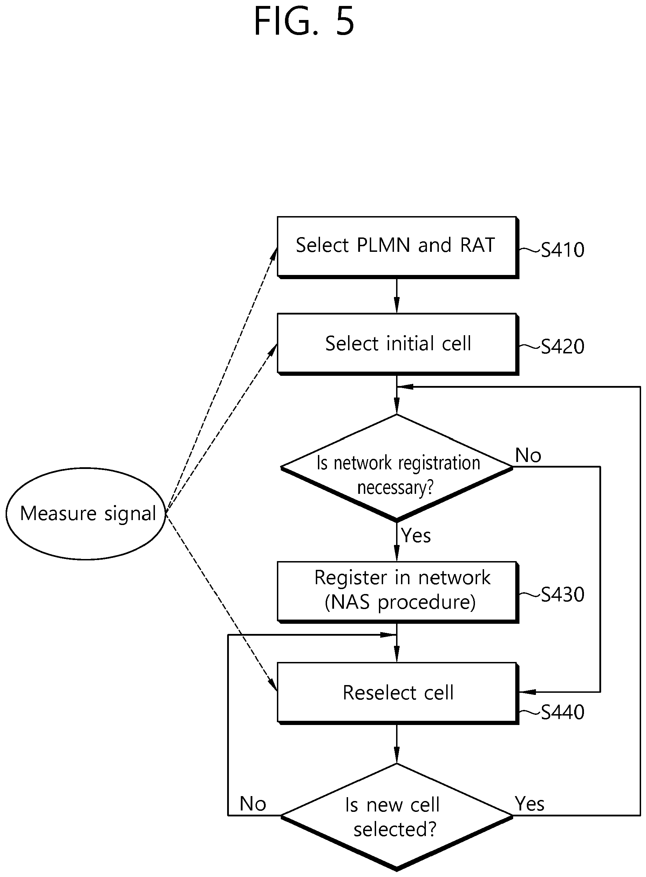

FIG. 5 is a flowchart illustrating a process in which a UE in an idle state selects a cell.

FIG. 5 illustrates a procedure in which a UE, which is just powered on, registers in a network via a cell selection process and, if necessary, subsequently performs cell reselection.

Referring to FIG. 5, the UE selects an RAT for communication with a PLMN from which the UE is to be provided with a service (S410). Information on the PLMN and RAT may be selected by a user of the UE or be stored in a universal subscriber identity module (USIM).

The UE selects a cell with a highest signal intensity or quality among cells having measured BSs with signal intensities or qualities greater than a specific value (cell selection, S420). This process, in which the UE powered on performs cell selection, may be referred to as initial cell selection. A cell selection procedure will be described below.

After selecting the cell, the UE receives system information periodically forwarded by the BS.

Parameters as cell selection criteria used by the UE in the cell selection process are illustrated below in Equation 1.

$$[\text{Equation 1}]$$

$$Srxlev > 0$$

$$Squal > 0$$

Here, Srxlev and Squal are defined by the following equation.

$$[\text{Equation 2}]$$

$$Srxlev = Q_{rxlevmeas} - (Q_{rxlevmin} + Q_{rxlevminoffset}) - Pcompensation$$

$$Squal = Q_{qualmeas} - (Q_{qualmin} + Q_{qualminoffset})$$

Srxlev is calculated based on Reference Signal Received Power (RSRP) in the LTE system and Received Signal Code Power (RSCP) in the UMTS. Squal is calculated based on Reference Signal Received Quality (RSRQ) in the LTE system and Ec/No in the UMTS, which is a value of received power (Ec) per chip of a pilot channel divided by total noise power density (N0).

Specifically, in LTE, Srxlev is a cell selection reception (RX) level value (dB), $Q_{rxlevmeas}$ is a measured cell RX level value (RSRP), $Q_{rxlevmin}$ is a minimum required RX level in the cell (dBm), $Q_{rxlevminoffset}$ is an offset to $Q_{rxlevmeas}$, and Pcompensation=max($P_{EMAX}$ - $P_{UMAX}$, 0) (dB), where $P_{EMAX}$ is a maximum transmission (Tx) power level (dBm) that a UE may use for transmission in the cell and $P_{UMAX}$ is a maximum RF power (dBm) of a UE according to UE performance. Further, in LTE, Squal is a cell selection quality value (dB), $Q_{qualmeas}$ is an RSRQ, $Q_{qualmin}$ is a minimum required quality level (dB) in the cell, and $Q_{qualminoffset}$ is an offset to $Q_{qualmin}$.

Equations 1 and 2 show that the UE selects a cell having higher measured signal intensity and quality than specific values determined by the cell providing a service. The parameters used in Equations 1 and 2 are broadcast through the system information, and the UE receives the parameters to use as cell selection criteria.

When network registration is necessary (S430), the UE performs a network registration procedure (S440). The UE registers information on the UE (for example, International Mobile Subscriber Identity (IMSI)) to receive a service (for example, a paging service) from the network. The UE does not register in a network for access whenever the UE selects a cell, but the UE registers in a network only when network information (for example, tracking area identity (TAI)) transmitted via the system information is different from network information that the UE has.

The UE performs cell reselection based on service environments provided by the cell or UE environments (S450).

For example, when an intensity or quality level of a signal measured in a currently accessed cell is lower than measurements from a BS of a neighboring cell, the UE reselects one of other cells providing better signal characteristics than the accessed cell. This process is referred to as cell reselection, separate from initial cell selection. After the UE selects a cell through the cell selection process, an intensity or quality of a signal between the UE and a BS may be varied by mobility of the UE or changes in radio environments. If the quality of a selected cell is reduced, the UE may reselect another cell providing better quality. In cell reselection, the UE generally reselects a cell providing better signal quality than a currently selected cell. Here, temporal constraints are imposed to avoid frequent cell reselection according to changes in signal characteristics. The cell reselection procedure will be described below.

There are methods of selecting or reselecting a cell according to signal characteristics in radio environments, in which the following cell reselection methods according to RAT and frequency characteristics of a cell may be used when selecting a cell for reselection in cell reselection.

- Inter-RAT cell reselection: the UE reselects a cell using a different RAT from an RAT of a cell that the UE is camping on.
- Intra-frequency cell reselection: the UE reselects a cell having the same RAT and the same center frequency as a cell that the UE is camping on.
- Inter-frequency cell reselection: the UE reselects a cell having the same RAT as a cell that the UE is camping on and a different center frequency from the cell that the UE is camping on.

First, inter-RAT cell reselection and intra-frequency cell reselection are based on priorities. The network may provide priorities of RATs (inter-RATs) and priorities of frequencies commonly applied to UEs in the cell through broadcast signaling or provide priorities of RATs (inter-RATs) and priorities of frequencies which are different by UEs through dedicated signaling.

According to priorities, if a neighboring cell using an RAT having a higher priority than the serving cell and a frequency having a higher priority than the serving cell satisfies Equation 1, the UE reselects the neighboring cell.

However, if the serving cell and the neighboring cell have the same priority, cell reselection is based on ranking. Further, intra-frequency cell reselection is also based on ranking. Ranking is a process of defining an index for evaluation for cell reselection and ranking cells according to index. A cell having a highest index is generally referred to as a best ranked cell. A cell index is a basic value measured by the UE for the cell, to which a frequency offset or cell offset is applied if necessary.

Ranking is described as follows. A ranking criterion is defined by Equation 3.

[Equation 3]

$$\text{Rs} = Q_{meas,s} + Q_{hyst}$$

$$\text{Rn} = Q_{meas,n} - Q_{offset}$$

Here, Rs is a ranking criterion of the serving cell, Rn is a ranking criterion of the neighboring cell, $Q_{meas,s}$ is a quality value of the serving cell measured by the UE, $Q_{meas,n}$ is a quality value of the neighboring cell measured by the UE, $Q_{hyst}$ is a hysteresis value for ranking, and $Q_{offset}$ is an offset between the two cells.

In intra-frequency, when the UE receives the offset between the serving cell and the neighboring cell ($Q_{offsets,n}$), $Q_{offset}=Q_{offsets,n}$; and when the UE does not receive $Q_{offsets,n}$, Qoffset = 0.

If the ranking criterion of the serving cell (Rs) and the ranking criterion of the neighboring cell (Rn) are changed in similar states, rankings of the cells are frequently alternated as a result of the changes so that the UE may alternately reselect the two cells. Qhyst is a parameter to apply hysteresis in cell reselection so as to prevent the UE from alternately reselecting the two cells.

The UE measures Rs of the serving cell and Rn of the neighboring cell according to the above equation and considers a cell having a highest ranking criterion as a best ranked cell to reselect the cell.

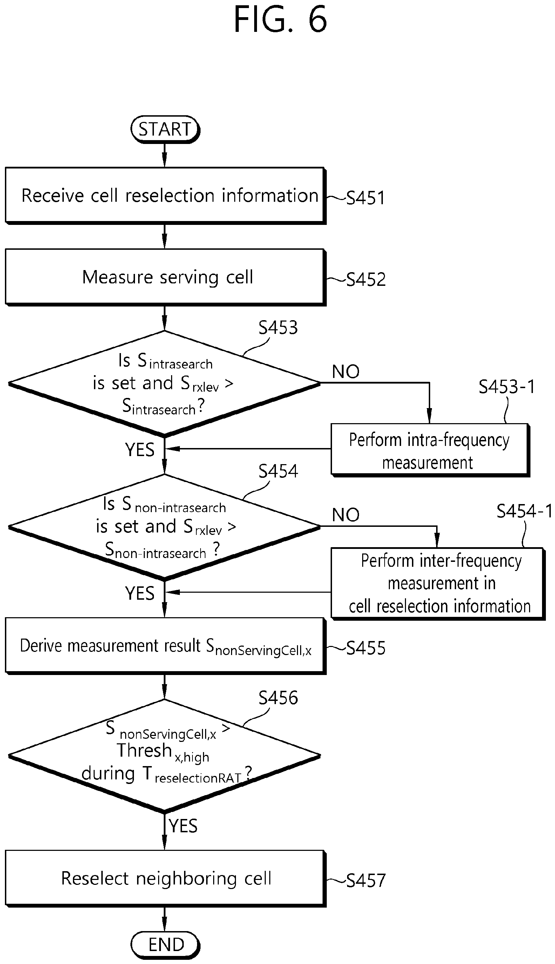

FIG. 6 is a flowchart illustrating the cell reselection process illustrated in FIG. 5 in detail.

The UE 100 receives cell reselection information from the BS (S451). The cell reselection information may include two threshold values, $S_{intrasearch}$ and $S_{non-intrasearch}$. $S_{intrasearch}$ may be divided into $S_{intrasearchP}$ and $S_{intrasearchQ}$. $S_{intrasearchP}$ is a threshold value of Srxlev for intra-frequency measurement, which is expressed in dB. $S_{intrasearchQ}$ is a threshold value of Squal for intra-frequency measurement, which is expressed in dB. Further, $S_{non-intrasearch}$ may be divided into $S_{non-intraserachP}$ and $S_{non-intraserachQ}$. $S_{non-intraserachP}$ is a threshold value of Srxlev for inter-frequency and inter-RAT measurements, which is expressed in dB. $S_{non-intraserachQ}$ is a threshold value of Squal for inter-frequency and inter-RAT measurements, which is expressed in dB.

The UE measures the serving cell (S452). A result of measuring the serving cell uses Srxlev or Squal in Equation 1.

The UE performs comparison as in Equation 4 as a criterion for measuring a neighboring cell present on the same frequency as the serving cell (S453).

[Equation 4]

$$\text{Srxlev} > S_{IntraSearchP}$$

$$\text{Squal} > S_{IntraSearchQ}$$

If Srxlev > $S_{IntraSearchP}$ or Squal > $S_{IntraSearchQ}$ is not satisfied, the UE performs measurement on the neighboring cell present on the same frequency as the serving cell (S453-1). However, if Srxlev > $S_{IntraSearchP}$ or Squal > $S_{IntraSearchQ}$ is satisfied, the UE may omit measurement on the neighboring cell present on the same frequency as the serving cell.

If the cell reselection information includes no $S_{intrasearch}$, the UE may not omit measurement on the neighboring cell present on the same frequency as the serving cell.

Meanwhile, the UE performs comparison as in Equation 5 as a criterion for measuring a neighboring cell present on a different frequency from the serving cell (S454).

[Equation 5]

$$Srxlev > S_{non\text{-}intraserachP}$$

$$Squal > S_{non\text{-}intraserachQ}$$

If $Srxlev > S_{non\text{-}intraserachP}$ or $Squal > S_{non\text{-}intraserachQ}$ is not satisfied, the UE may perform inter-frequency measurement, that is, measurement on the cell present on the different frequency from the serving cell (S454-1). However, if the serving cell has a higher quality so that $Srxlev > S_{non\text{-}intraserachP}$ or $Squal > S_{non\text{-}intraserachQ}$ is satisfied, the UE may omit measurement on the neighboring cell present on the different frequency from the serving cell.

If the cell reselection information includes no $S_{non\text{-}intrasearch}$, the UE may not omit measurement on the neighboring cell present on the different frequency from the serving cell.

The UE 100 derives a result of measurement on a neighboring cell x, that is, SnonServingCell,x (S455).

If the cell x on a measured frequency has a higher $S_{nonServingCell},x$ than $Thresh_{x,high}$ in a time period of $T_{reselectionRAT}$ (S456), the UE 100 reselects the cell (S457). $S_{nonServingCell},x$ may be Srxlev or Squal of the cell x on the measured frequency.

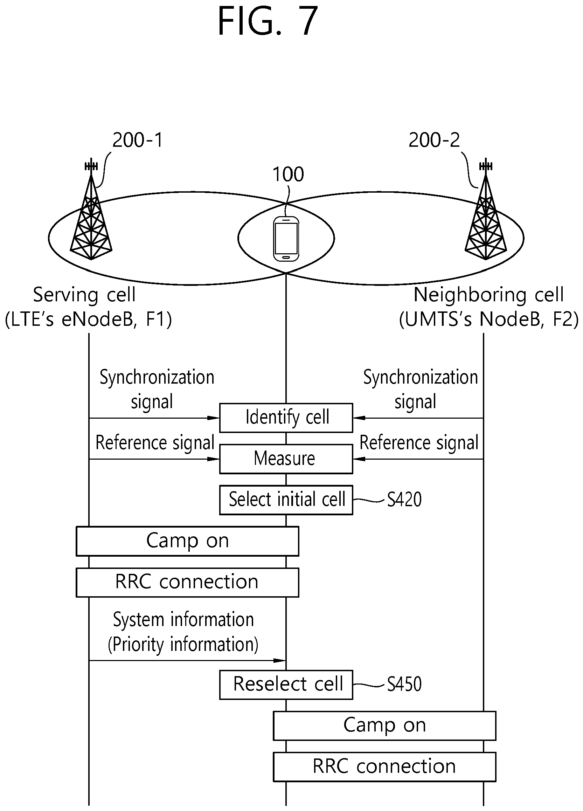

FIG. 7 is a flowchart illustrating a process of performing inter-RAT cell reselection and inter-frequency cell reselection.

FIG. 7 shows that an LTE-based eNodeB 200-1 uses frequency F1 and a UMTS-based NodeB 200-2 uses frequency F2.

A UE 100, which is just powered on, performs an initial cell selection process, in which the UE 100 receives synchronization signals, that is, a primary synch signal (PSS) and a secondary synch signal (SSS), from the eNodeB 200-1 and NodeB 200-2 first and acquires cell IDs through the synchronization signals to identify the cells.

Subsequently, the UE 100 performs cell measurement through a reference signal, for example, a cell-specific reference signal (CRS). For better understanding, a CRS is briefly described as follows. A CRS is a reference signal shared between all UEs in a cell and is used for acquiring channel state information and handover measurement. The UE measures a CRS to measure Reference Signal Received Power (RSRP) and Reference Signal Received Quality (RSRQ). Further, the UE may derive feedback information, such as channel quality information (CQI), precoding matrix indicator (PMI), and rank indicator (RI) through the CRS.

The UE 100 performs initial cell selection according to the above description (S420).

If the UE 100 selects the LTE-based eNodeB 200-1, the UE 100 camps on the eNodeB 200-1.

Accordingly, the eNodeB 200-1 is a serving cell in FIG. 7. Subsequently, the UE 100 establishes RRC connection and receives system information, for example, an MIB and an SIB, from the serving cell, the eNodeB 200-1. The MIB may be transmitted through a physical broadcast channel (PBCH), and the SIB may be transmitted through a physical downlink shared channel (PDSCH). The system information, for example, the SIB, may include inter-RAT priorities and frequency priorities.

The UE 100 reselects a cell of the NodeB 200-2 according to inter-RAT priorities and frequency priorities (S450).

The UE 100 camps on the cell of the NodeB 200-2 and establishes RRC connection.

Hereinafter, machine-type communication (MTC) will be described.

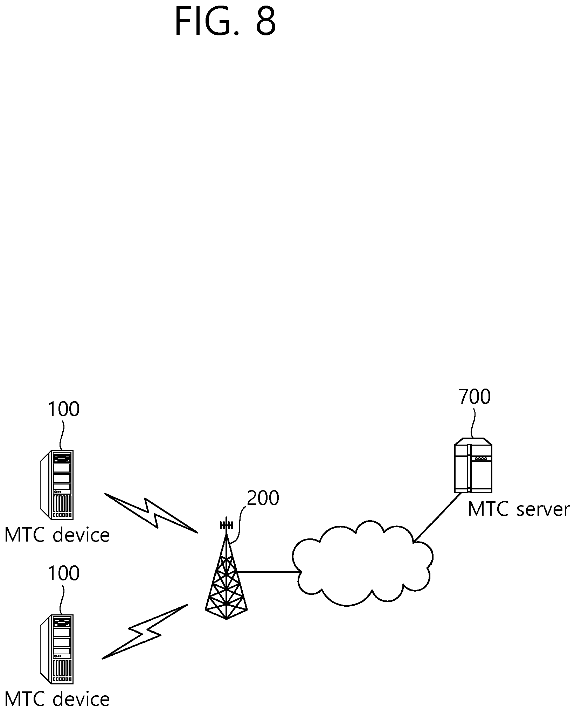

FIG. 8 illustrates an example of MTC.

MTC refers to an information exchange between MTC devices 100 via a BS 200 or information exchange between an MTC device 100 and an MTC server 700 via a BS without involving human interactions.

The MTC server 700 is an entity to communicate with the MTC device 100. The MTC server 700 runs an MTC application and provides the MTC device with an MTC-specific service.

The MTC device 100 is a wireless device to provide MTC communication, which may be stationary or mobile.

Services provided through MTC are differentiated from existing communication services involving human intervention and an MTC service range is wide, for example, tracking, metering, payment, medical services, remote control, or the like. More specifically, examples of MTC services may include reading a meter, measuring a water level, utilizing a surveillance camera, inventory reporting of a vending machine, etc.

The MTC device is characterized in that a transmission data amount is small and uplink/downlink data transmission/reception occurs sometimes. Therefore, it is effective to decrease a unit cost of the MTC device and to decrease battery consumption according to a low data transmission rate.

Hereinafter, characteristics of MTC devices are summarized in the follwing table.

[Table 1]

| MTC device type | Required data rate | Required error rate | Delay sensitivity |
|---|---|---|---|
| Smart meter | Low | Low | Low |
| Fleet management | Low | Low | Medium |
| Point of sale terminal (POS) | Low | Medium | High |
| Live video | Low | Low | Low |

As illustrated above, unlike a legacy UE, the MTC device is characterized by requiring not a wide range of services but only very few special services. Thus, the MTC device only needs to camp on a cell capable of providing a low-quality service and thus needs not frequently perform a cell reselection procedure.

<Method according to one embodiment of the present invention>

One embodiment of the present invention discloses a method for achieving efficiency in the number of times a device requiring only a pre-designated service, for example, an MTC device, performs a cell selection procedure and a cell reselection procedure. Here, the cell selection procedure and the cell reselection procedure are performed based on a comparison of a predetermined threshold and a parameter, such as a power level of a signal received from a cell. Thus, one embodiment of the present invention provides a different category-specific parameter used for evaluation for cell selection and cell reselection.
Here, a category refers to a system classified according to delay tolerance, that is, delay sensitivity.
For example, categories are classified as follows.
Various criteria may be used to classify categories.

a) Categories may be classified according to delay sensitivity of a service to be initiated by a UE. For example, when different service delay sensitivities are required, categories may be differently classified.
b) Categories may be classified according to a required error rate of a service to be initiated by a UE. For example, when different error rates are required, categories may be differently classified.
c) Categories may be classified according to a required data rate of a service to be initiated by a UE. For example, when different minimum data rates are required, categories may be differently classified.
d) Categories may be classified according to required operation power efficiency of a service to be initiated by a UE. For example, based on whether it is operated in a power saving mode or in other modes, categories may be differently classified.

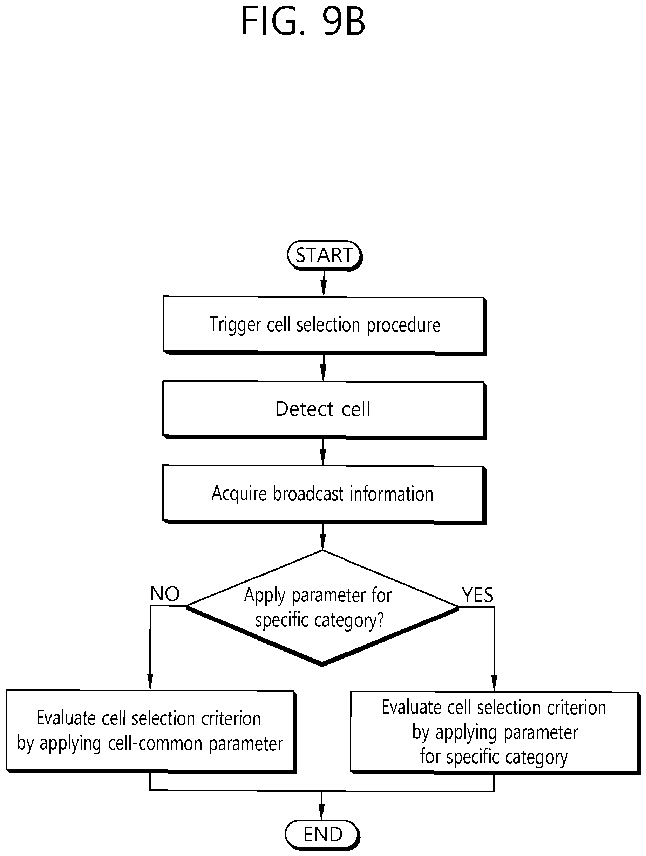

Hereinafter, the embodiment will be described in detail with reference to drawings.

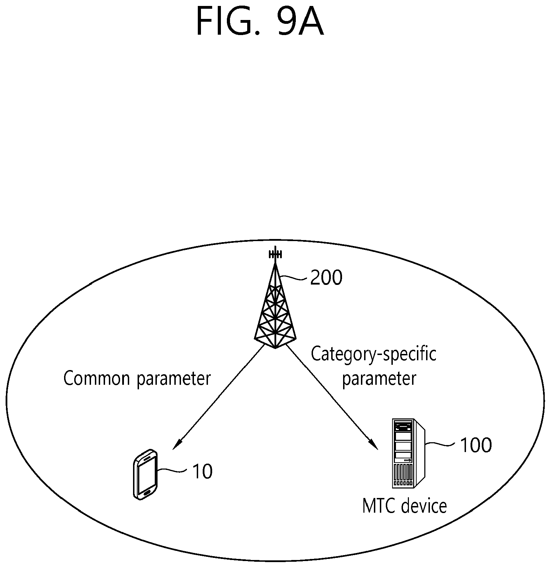

FIGS. 9a to 9c illustrate examples of the method according to the embodiment of the present invention.
First, as illustrated in FIG. 9a, a BS 200 may provide different parameters to a legacy UE 10 and an MTC device 100. For example, the BS 200 may provide the legacy UE 10 with a cell-common parameter to be used in the cell selection and cell reselection procedures and provide the MTC device 100 with a category-specific parameter to be used in the cell selection and cell reselection procedures. The category-specific parameter will be described in detail later.
As illustrated in FIG. 9b, when the cell selection procedure is triggered, the MTC device 100 detects a cell and acquires broadcast information from the cell. As described above, the broadcast information may include the cell-common parameter to be used in the cell selection and cell reselection procedures. Further, the category-specific parameter may be included in the broadcast information. Here, the category-specific parameter may include only an offset to the cell-common parameter. Alternatively, the category-specific parameter may be preset in the MTC device or be received via a different network signal, instead of being included in the broadcast information.
Subsequently, the MTC device 100 determines whether the MTC device 100 is configured to use a specific category and to further apply a parameter for the specific category (category-specific parameter). To this end, a network may transmit a signal indicating that the MTC device 100 needs to apply the category-specific parameter. In this case, when the MTC device 100 does not receive the signal, the MTC device 100 may determine not to apply the category-specific parameter. On the contrary, the network may transmit a signal indicating that the MTC device 100 needs not apply the category-specific parameter. In this case, when the MTC device 100 does not receive the signal, the MTC device 100 may determine to apply the category-specific parameter.
When the MTC device 100 is configured to use a specific category and to further apply a parameter for the specific category, the MTC device 100 applies the parameter for the specific category to evaluate a cell selection criterion.
However, when the MTC device 100 is not configured to use a specific category or to apply a parameter for the specific category, the MTC device 100 applies the cell-common parameter to evaluate a cell selection criterion.

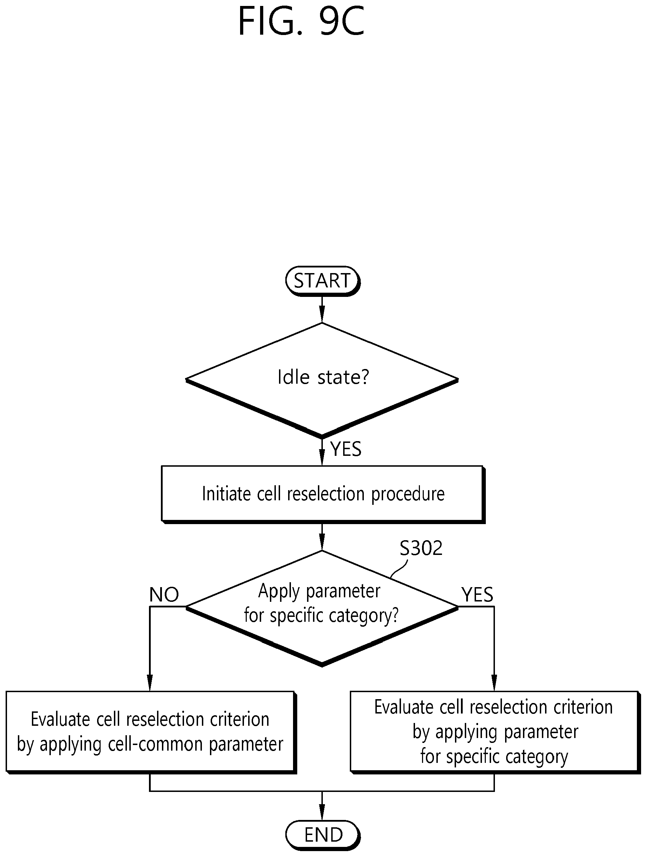

Referring to FIG. 9c, when the MTC device 100 initiates the cell reselection procedure in the idle state, the MTC device 100 determines whether to apply a parameter for a specific category (category-specific parameter). To this end, the network may transmit a signal indicating that the MTC device 100 needs to apply the category-specific parameter. In this case, when the MTC device 100 does not receive the signal, the MTC device 100 may determine not to apply the category-specific parameter. On the contrary, the network may transmit a signal indicating that the MTC device 100 needs not apply the category-specific parameter. In this case, when the MTC device 100 does not receive the signal, the MTC device 100 may determine to apply the category-specific parameter

When the MTC device 100 is configured to use a specific category and to further apply a parameter for the specific category, the MTC device 100 applies the parameter for the specific category to evaluate a cell selection criterion.

However, when the MTC device 100 is not configured to use a specific category or to apply a parameter for the specific category, the MTC device 100 applies the cell-common parameter to evaluate a cell reselection criterion.

Hereinafter, a category-specific parameter used for cell selection will be described.

First, according to one embodiment, Srxlev and Squal, which are parameters used as cell selection criteria, may be modified for a specific category as in the following equation.

[Equation 6]

$$Srxlev = Q_{rxlevmeas} - (Q_{rxlevmin\_category} + Q_{rxlevminoffset}) - Pcompensation$$

$$Squal = Q_{qualmeas} - (Q_{qualmin\_category} + Q_{qualminoffset})$$

Comparing Equation 6 with Equation 2, $Q_{rxlevmin}$ is replaced by $Q_{rxlevmin\_category}$, and $Q_{rxlevmin}$ is replaced by $Q_{rxlevmin\_category}$. As described above with reference to Equation 2, $Q_{rxlev\,min}$ and $Q_{rxlevmin}$ are cell-common parameters which are broadcast through the system information. However, $Q_{rxlevmin\_category}$ and $Q_{rxlevmin\_category}$ are category-specific parameters according to the embodiment of the present invention. Here, $Q_{rxlevmin\_category}$ may have a smaller value than $Q_{rxlevmin}$ to reduce the number of cell selection times, and $Q_{rxlevmin\_category}$ may have a smaller value than $Q_{rxlevmin}$ to reduce the number of cell selection times. $Q_{rxlevmin\_category}$ and $Q_{rxlevmin\_category}$ may have different values per category. Here, a cell may provide a different value of $Q_{rxlevmin\_category}$ by category. Likewise, the cell may provide a different value of $Q_{rxlevmin\_category}$ by category. Alternatively, the cell may provide $Q_{rxlevmin\_category}$ and $Q_{rxlevmin\_category}$ values for one specific category. Here, $Q_{rxlevmin\_category}$ and $Q_{rxlevmin\_category}$ values for another category may be defined as offsets. The offsets may be preset for each category in the MTC device or acquired by the MTC device through a separate signal.

Next, according to another embodiment, Srxlev and Squal, which are parameters used as cell selection criteria, may be modified for a specific category as in the following equation.

[Equation 7]

$$Srxlev = Q_{rxlevmeas} - (Q_{rxlevmin} + Q_{rxlevminoffset}) - Pcompensation + Qrxthres\_category$$

$$Squal = Q_{qualmeas} - (Q_{qualmin} + Q_{qualminoffset}) + Qqualthres\_category$$

Comparing Equation 7 with Equation 2, Qrxthres_category and Qqualthres_category are further added, respectively. Qrxthres category is a category-specific parameter provided according to the other embodiment of the present invention, which is a threshold of a reception level by category. As compared with Equation 2, Qrxthres_category is further added in order to satisfy Srxlev > 0 as the cell selection criterion illustrated in Equation 1 if possible. Likewise, as compared with Equation 2, Qrxthres_category is further added in order to satisfy Squal > 0 as the cell selection criterion illustrated in Equation 1 if possible. Meanwhile, Qrxthres_category and Qqualthres_category may have different values per category. Here, the cell may provide different values of Qrxthres_category and Qqualthres_category by category. Alternatively, the cell may provide Qrxthres_category and Qqualthres_category values for one specific category. Here, Qrxthres_category and Qqualthres_category values for another category may be defined as offsets. The offsets may be preset for each category in the MTC device or acquired by the MTC device through a separate signal.

Meanwhile, a category-specific parameter used for cell reselection will be described below.

First, according to one embodiment, Srxlev and Squal, which are parameters used as measurement criteria for cell reselection, may be modified for a specific category as in the following equation.

[Equation 8]

$$Srxlev + Q_{rxlevmeasoffset\_category} > S_{IntraSearchP}$$

$$Squal + Q_{qualmeasoffest\_category} > S_{IntraSearchQ}$$

Comparing Equation 8 with Equation 4, $Q_{rxlevmeasoffset\_category}$ and $Q_{qualmeasoffest\_category}$ are added according to the embodiment of the present invention. $Q_{rxlevmeasoffset\_category}$ is a category-specific parameter according to the embodiment of the present invention which is an offset to a reception level by category and may have a different value by category. $Q_{qualmeasoffest\_category}$ is a category-specific parameter according to the embodiment of the present invention which is an offset to a quality level by category and may have a different value by category. Meanwhile, the cell may provide different values of $Q_{rxlevmeasoffset\_category}$ and $Q_{qualmeasoffest\_category}$ by category. Alternatively, the cell may provide $Q_{rxlevmeasoffset\_category}$ and $Q_{qualmeasoffest\_categor}$ values for one specific category. Here, $Q_{rxlevmeasoffset\_category}$ and $Q_{qualmeasoffest\_category}$ values for another category may be defined as delta values. The delta values may be preset for each category in the MTC device or acquired by the MTC device through a separate signal. If $Srxlev + Q_{rxlevmeasoffset\_category} > S_{IntraSearchP}$ is satisfied or $Squal + Q_{qualmeasoffest\_category} > S_{IntraSearchQ}$ is satisfied, the MTC device determines that a serving cell is superior to a neighboring cell and accordingly may not perform measurement for inter-frequency cell reselection. Further, the MTC device may not perform measurement for reselecting an inter-RAT frequency cell having a lower priority or the same priority.

Next, according to one embodiment, a ranking criterion used as a criterion for cell reselection in the case where the serving cell and the neighboring cell have the same priority may be modified as in the following equation.

[Equation 9]

$$Rs = Q_{meas,s} + Q_{hyst} + Q_{category}$$

$$Rn = Q_{meas,n} - Q_{offset}$$

Comparing Equation 9 with Equation 3, $Q_{category0}$ is further added only to Rs that is the ranking criterion of the serving cell according to the embodiment of the present invention. $Q_{category}$ may have a different value by category. Here, the cell may provide a different value of $Q_{category}$ by category. According to Equation 9, since Rs as the ranking criterion of the serving cell is higher than Rn as the ranking criterion of the neighboring cell, the MTC device stays in the serving cell as long as possible.

Meanwhile, Equation 9 may be modified into the following equation.

[Equation 10]

$$Rs = Q_{meas,s} + Q_{hyst} + Q_{category,s}$$

$$Rn = Q_{meas,n} - Q_{offset} + Q_{category,n}$$

Comparing Equation 10 with Equation 9, $Q_{category,n}$ is also added to the ranking criterion of the neighboring cell that is Rn.

Meanwhile, evaluation for reselecting a cell having a lower priority than the serving cell may be modified as follows.

When $Thresh_{X\_Q}$ (for example, $Thresh_{Serving, LowQ}$ for the serving cell) is received, if $Squal + Q_{qaualoffset\_category} < Thresh_{Serving, LowQ}$ is satisfied for the serving cell and $Squal > Thresh_{X,LowQ}$ is satisfied for a neighboring cell having a lower priority during a time period of Treselection, the MTC device may reselect the neighboring cell having the lower priority. $Q_{qaualoffset\_category}$ is a reception level offset added according to the embodiment of the present invention. Alternatively, if $Srxlev + Q_{rxlevoffset\_category} < Thresh_{Serving,LowP}$ is satisfied for the serving cell and $Srxlev > Thresh_{X,LowP}$ is satisfied for the neighboring cell having the lower priority during a time period of Treselection, the MTC device may reselect the neighboring cell having the lower priority. $Q_{rxlevoffset\_category}$ is a quality offset added according to the embodiment of the present invention.

Hereinafter, modifications of the aforementioned method will be described.

In evaluating a neighboring cell having a different priority from a serving cell for cell reselection, a network may transmit priorities by category to an MTC device in addition to absolute priorities. When the priorities by category are received, the MTC device may use the priorities by category for cell evaluation and measurement. Accordingly, the MTC device may re-set reselection priorities in some frequencies for a particular category. Meanwhile, the MTC device may or may not use the priorities by category depending on a particular situation. For example, when the MTC is restricted in transmission and reception of general data, it is preferable that the MTC device moves to a general CS-based cell rather than to an LTE-based cell. In this situation, the CS-based cell may have a higher priority according to the priorities by category, and accordingly the MTC device reselects the CS-based cell. According to another method in which the MTC device uses the priorities by category depending on a particular situation, it may be considered to associate a cell reselection priority set by category with a region. In this method, priority information by category applied to a particular region is previously stored in an UE or separately signaled. The UE selectively applies a cell reselection priority according to current location and service category. For example, suppose that a cell reselection priority set for category a applicable in region A is P_Aa and a cell reselection priority set for category b applicable in the same region is P_Ab. Further, suppose that a cell reselection priority set for category a applicable in region B is P_Ba and a cell reselection priority set for category b applicable in the same region is P_Bb. Based on this configuration, the UE performs cell reselection using P_Aa to initiate a service belonging to category a in region A and performs cell reselection using P_Bb to initiate a service belonging to category b in region B.

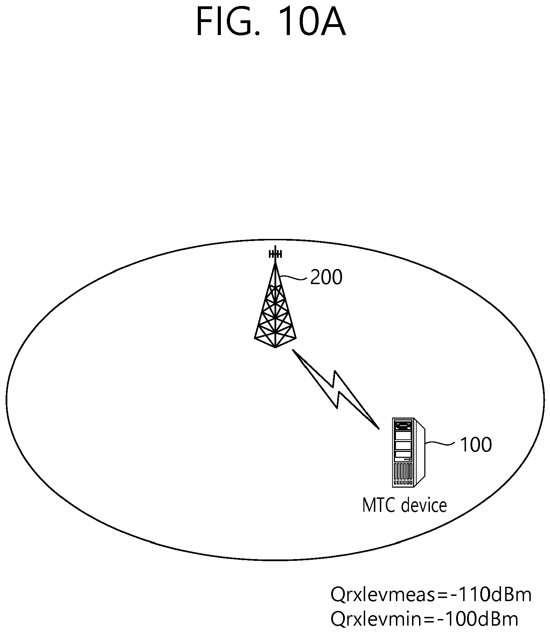

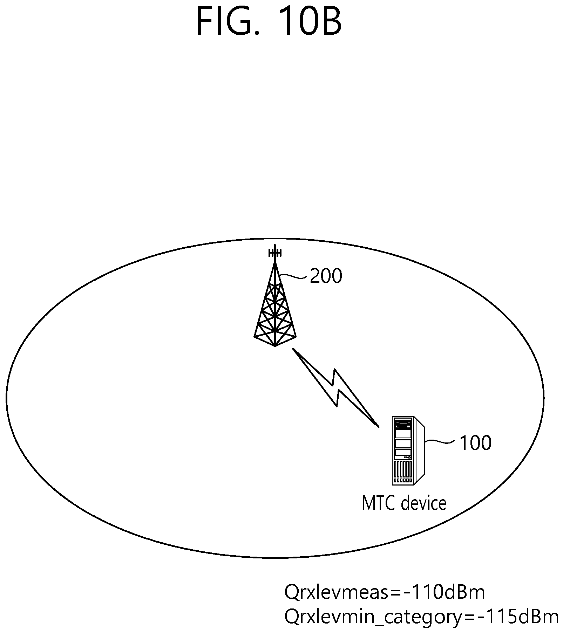

FIG. 10a illustrates an operation according to a conventional technology, and FIG. 10b illustrates an example of applying the embodiment.

It is assumed that an MTC device 100 illustrated in FIG. 10a is a smart meter which is installed in a place where a signal from a cell 200 of a BS is weak, for example, in a basement of a building. Here, as shown, it is assumed that there is only one cell that the MTC device 100 can camp on. Here, intensity of the signal from the cell measured by the MTC device 100 is -110 dBm. In this situation, a very poor service (for example, a service with high delay and high error rate) is provided from the cell or a service is unavailable for a legacy UE. However, as illustrated in FIG. 10b, when the MTC device 100 applies a parameter by category, Qrxlevmin_category, according to the embodiment of the present invention, the MTC device 100 does not require high data transmission speed and thus may determine that a service is available from the cell despite slightly high data error rate and delay.

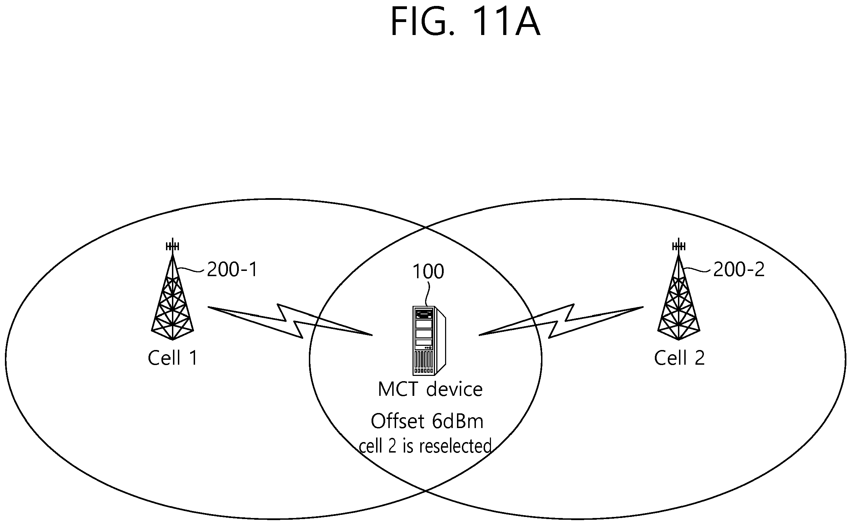

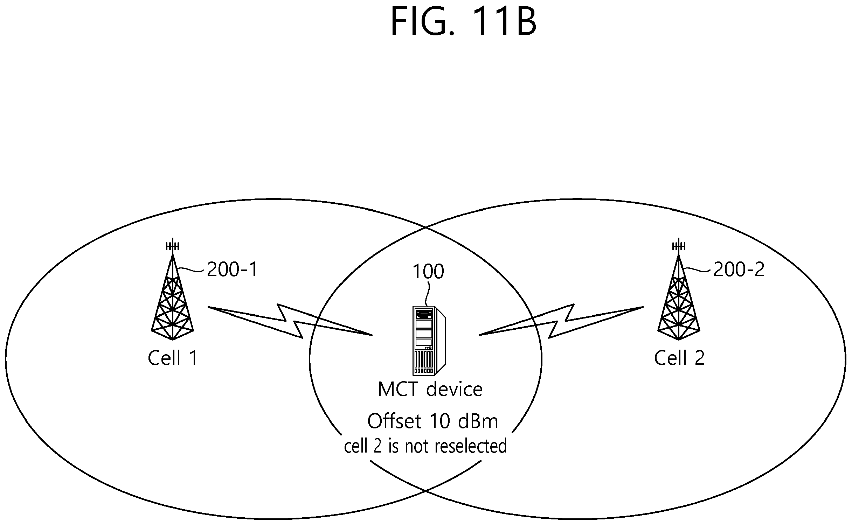

FIG. 11a illustrates another operation according to a conventional technology, and FIG. 11b illustrates an example of applying the embodiment.

An LTE-based legacy UE performs measurement on a neighboring cell when Rx signal intensity (or quality) of a serving cell is a specific threshold or lower. Referring to FIG. 11a, when Rx signal intensity (or quality) of cell 1 as a serving cell is a specific threshold or lower, the MTC device 100 measures cell 2 and accordingly reselects cell 2. However, referring to FIG. 11b, when an offset by category is applied according to the embodiment of the present invention, the MTC device 100 may not measure cell 2 as a neighboring cell and accordingly may not reselect cell 2. According to the embodiment of the present invention, the number of measurement times is reduced to maximize battery saving effects and the number of cell reselection times is reduced so that the MTC device stays in the serving cell as long as possible.

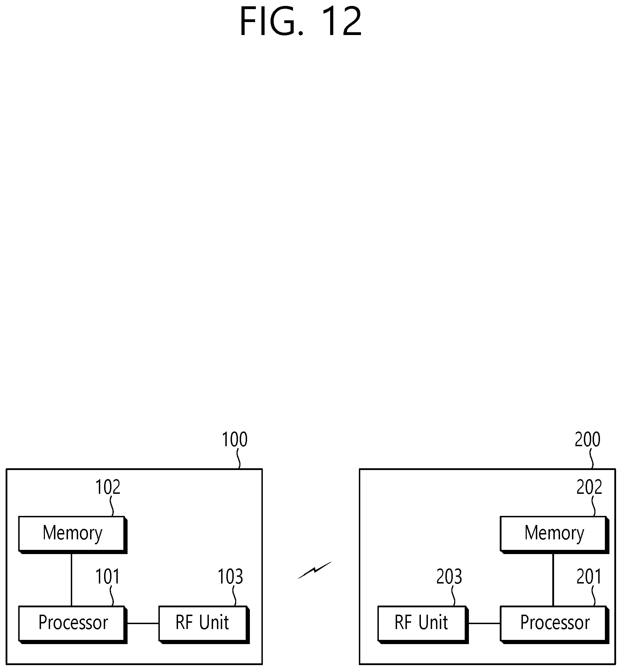

The aforementioned embodiments of the present invention can be implemented through various means. For example, the embodiments of the present invention can be implemented in hardware, firmware, software, combinations thereof, etc. Details thereof will be described with reference to FIG. 12.

FIG. 12 is a block diagram illustrating a wireless communication system according to an embodiment of the present invention.

A BS 200 includes a processor 201, a memory 202, and a radio frequency (RF) unit 203. The memory 202 is connected with the processor 201 and stores various pieces of information for driving the processor 201. The RF unit 203 is connected with the processor 201 and transmits and/or receives radio signals. The processor 201 implements the proposed functions, procedures, and/or methods. In the aforementioned embodiments, operations of the BS may be implemented by the processor 201.

An MTC device 100 includes a processor 101, a memory 102, and an RF unit 103. The memory 102 is connected with the processor 101 and stores various pieces of information for driving the processor 101. The RF unit 103 is connected with the processor 101 and transmits and/or receives radio signals. The processor 101 implements the proposed functions, procedure, and/or methods. In the aforementioned embodiments, operations of the MTC device may be implemented by the processor 101.

The processors may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The RF unit may include a baseband circuit for processing a radio signal. When the embodiment is implemented in software, the aforementioned methods can be implemented with a module (i.e., process, function, etc.) for performing the aforementioned functions.

**EP 3 079 411 B1**

The module may be stored in the memory and may be performed by the processor. The memory may be located inside or outside the processor, and may be coupled to the processor by using various well-known means.

**Claims**

1. A method for performing a cell selection, the method being performed by a Machine-type Communication, MTC, device (100) and comprising:

   receiving a common parameter and a category-specific parameter used for a cell selection procedure;
   performing measurement on at least one cell; and
   determining whether a value resulting from performing the measurement satisfies a criterion for cell selection, **characterized in that** if the device is not configured with a predetermined category, the common parameter is used in the criterion for cell selection, and if the device is configured with the predetermined category, the category-specific parameter is used instead of the common parameter in the criterion for cell selection.

2. The method of claim 1, wherein the common parameter and the category-specific parameter are broadcast from the cell.

3. The method of claim 1, wherein the value resulting from performing the measurement is expressed as Srxlev or Squal, and
   wherein if the criterion for the cell selection corresponds to Srxlev > 0 or Squal>0, the category-specific parameter is used to increment a value of the Srxlev or a value of the Squal.

4. The method of claim 1, wherein the cell selection procedure includes:

   using the common parameter for the determination; and
   if the device (100) does not require high data transmission speed, replacing the common parameter with the category-specific parameter and using the category-specific parameter for the determination.

5. A Machine-type Communication, MTC, device for performing a cell selection, comprising:

   a transceiver (103) configured to receive a common parameter and a category-specific parameter used for a cell selection procedure;
   a processor (101) configured to control the transceiver (103) thereby performing measurement on at least one cell and determine whether a value resulting from performing the measurement satisfies a criterion for cell selection,
   **characterized in that** if the device (100) is not configured with a predetermined category, the common parameter is used in the criterion for cell selection, and if the device is configured with the predetermined category, the category-specific parameter is used instead of the common parameter in the criterion for cell selection.

6. The device (100) of claim 5, wherein the transceiver (103) receives the common parameter and the category-specific parameter as information broadcast from the cell.

7. The device (100) of claim 5, wherein the value resulting from performing the measurement is expressed as Srxlev or Squal, and
   wherein if the criterion for the cell selection corresponds to Srxlev > 0 or Squal>0, the category-specific parameter is used to increment a value of the Srxlev or a value of the Squal.

8. The device (100) of claim 5, wherein the cell selection procedure includes:

   using the common parameter for the determination; and
   if the device (100) does not require high data transmission speed, using the category-specific parameter for the determination.

**Patentansprüche**

1. Verfahren zur Durchführung einer Zellauswahl, wobei das Verfahren durch eine Maschinentypkommunikationsvorrichtung, MTC-Vorrichtung, (100) durchgeführt wird und umfasst:

   Empfangen eines gemeinsamen Parameters und eines kategoriespezifischen Parameters, verwendet für eine Zellauswahlprozedur;
   Durchführen einer Messung an mindestens einer Zelle; und
   Bestimmen, ob ein Wert, der sich aus der Durchführung der Messung ergibt, ein Kriterium für eine Zellauswahl erfüllt,
   **dadurch gekennzeichnet, dass**, falls die Vorrichtung nicht mit einer vorgegebenen Kategorie konfiguriert ist, der gemeinsame Parameter in dem Kriterium für eine Zellauswahl verwendet wird, und, falls die Vorrichtung mit der vorgegebenen Kategorie konfiguriert ist, der kategoriespezifische Parameter anstelle des gemeinsamen Parameters in dem Kriterium für eine Zellauswahl verwendet wird.

2. Verfahren nach Anspruch 1, wobei der gemeinsame Parameter und der kategoriespezifische Parameter aus der Zelle rundgesendet werden.

3. Verfahren nach Anspruch 1, wobei der Wert, der sich aus der Durchführung der Messung ergibt, als Srxlev oder Squal ausgedrückt wird, und
   wobei, falls das Kriterium für die Zellauswahl Srxlev > 0 oder Squal > 0 entspricht, der kategoriespezifische Parameter dazu verwendet wird, einen Wert von Srxlev oder einen Wert von Squal zu erhöhen.

4. Verfahren nach Anspruch 1, wobei die Zellauswahlprozedur einschließt:

   Verwenden des gemeinsamen Parameters für die Bestimmung; und
   falls die Vorrichtung (100) keine hohe Datenübertragungsgeschwindigkeit erfordert, Ersetzen des gemeinsamen Parameters durch den kategoriespezifischen Parameter und Verwenden des kategoriespezifischen Parameters für die Bestimmung.

5. Maschinentypkommunikationsvorrichtung, MTC-Vorrichtung, zur Durchführung einer Zellauswahl, umfassend:

   einen Transceiver (103), der so konfiguriert ist, dass er einen gemeinsamen Parameter und einen kategoriespezifischen Parameter, verwendet für eine Zellauswahlprozedur, empfängt;
   einen Prozessor (101), der so konfiguriert ist, dass er den Transceiver (103) steuert, wodurch er eine Messung an mindestens einer Zelle durchführt, und bestimmt, ob ein Wert, der sich aus der Durchführung der Messung ergibt, ein Kriterium für eine Zellauswahl erfüllt,
   **dadurch gekennzeichnet, dass**, falls die Vorrichtung (100) nicht mit einer vorgegebenen Kategorie konfiguriert ist, der gemeinsame Parameter in dem Kriterium für eine Zellauswahl verwendet wird, und, falls die Vorrichtung mit der vorgegebenen Kategorie konfiguriert ist, der kategoriespezifische Parameter anstelle des gemeinsamen Parameters in dem Kriterium für eine Zellauswahl verwendet wird.

6. Vorrichtung (100) nach Anspruch 5, wobei der Transceiver (103) den gemeinsamen Parameter und den kategoriespezifischen Parameter als aus der Zelle rundgesendete Informationen empfängt.

7. Vorrichtung (100) nach Anspruch 5, wobei der Wert, der sich aus der Durchführung der Messung ergibt, als Srxlev oder Squal ausgedrückt ist, und wobei, falls das Kriterium für die Zellauswahl Srxlev > 0 oder Squal > 0 entspricht, der kategoriespezifische Parameter dazu verwendet wird, einen Wert von Srxlev oder einen Wert von Squal zu erhöhen.

8. Vorrichtung (100) nach Anspruch 5, wobei die Zellauswahlprozedur einschließt:

   Verwenden des gemeinsamen Parameters für die Bestimmung; und
   falls die Vorrichtung (100) keine hohe Datenübertragungsgeschwindigkeit erfordert, Verwenden des kategoriespezifischen Parameters für die Bestimmung.

**Revendications**

1. Procédé pour effectuer une sélection de cellule, le procédé étant réalisé par un dispositif de communication de type machine, MTC (« Machine-type Communication »), (100) et comprenant :

   recevoir un paramètre commun et un paramètre spécifique de catégorie utilisé pour une procédure de sélection de cellule ;
   réaliser une mesure sur au moins une cellule ; et
   déterminer si une valeur résultant de la réalisation de la mesure satisfait ou non à un critère pour la sélection de cellule,
   **caractérisé en ce que**, si le dispositif n'est pas configuré avec une catégorie prédéterminée, le paramètre commun est utilisé dans le critère pour la sélection de cellule, et, si le dispositif est configuré avec la catégorie prédéterminée, le paramètre spécifique de catégorie est utilisé au lieu du paramètre commun dans le critère pour la sélection de cellule.

2. Procédé selon la revendication 1, dans lequel le paramètre commun et le paramètre spécifique de catégorie sont diffusés depuis la cellule.

3. Procédé selon la revendication 1, dans lequel la valeur résultant de la réalisation de la mesure est exprimée sous la forme Srxlev ou Squal, et
   dans lequel, si le critère pour la sélection de cellule correspond à Srxlev > 0 ou Squal > 0, le paramètre spécifique de catégorie est utilisé pour incrémenter une valeur de Srxlev ou une valeur de Squal.

4. Procédé selon la revendication 1, dans lequel la procédure de sélection de cellule inclut :

   utiliser le paramètre commun pour la détermination ; et
   si le dispositif (100) ne nécessite pas de haute vitesse de transmission de données, remplacer le paramètre commun par le paramètre spécifique de catégorie et utiliser le paramètre spécifique de catégorie pour la détermination.

5. Dispositif de communication de type machine, MTC (« Machine-type Communication »), pour effectuer une sélection de cellule, comprenant :

   un émetteur-récepteur (103) configuré pour recevoir un paramètre commun et un paramètre spécifique de catégorie utilisés pour une procédure de sélection de cellule ;
   un processeur (101) configuré pour commander l'émetteur-récepteur (103), en réalisant ainsi une mesure sur au moins une cellule, et déterminer si une valeur résultant de la réalisation de la mesure satisfait ou non à un critère pour la sélection de cellule,
   **caractérisé en ce que**, si le dispositif (100) n'est pas configuré avec une catégorie prédéterminée, le paramètre commun est utilisé dans le critère pour la sélection de cellule, et, si le dispositif est configuré avec la catégorie prédéterminée, le paramètre spécifique de catégorie est utilisé au lieu du paramètre commun dans le critère pour la sélection de cellule.

6. Dispositif (100) selon la revendication 5, dans lequel l'émetteur-récepteur (103) reçoit le paramètre commun et le paramètre spécifique de catégorie en tant qu'informations diffusées à partir de la cellule.

7. Dispositif (100) selon la revendication 5, dans lequel la valeur résultant de la réalisation de la mesure est exprimée sous la forme Srxlev ou Squal, et
   dans lequel, si le critère pour la sélection de cellule correspond à Srxlev > 0 ou Squal > 0, le paramètre spécifique de catégorie est utilisé pour incrémenter une valeur de Srxlev ou une valeur de Squal.

8. Dispositif (100) selon la revendication 5, dans lequel la procédure de sélection de cellule inclut :

   utiliser le paramètre commun pour la détermination ; et
   si le dispositif (100) ne nécessite pas de haute vitesse de transmission de données, utiliser le paramètre spécifique de catégorie pour la détermination.

# FIG. 1

# FIG. 2

| UE | | BS | |
|---|---|---|---|
| PDCP | ⟷ | PDCP | |
| RLC | ⟷ | RLC | |
| MAC | ⟷ | MAC | |
| PHY | ⟷ | PHY | |

# FIG. 3

UE

BS

MME

NAS

NAS

RRC

RRC

PDCP

PDCP

RLC

RLC

MAC

MAC

PHY

PHY

# FIG. 4

Go here whenever
a new PLMN
is selected

Cell information
stored for the PLMN

No cell information
stored for the PLMN

(1)

No suitable
cell found

| Stored information Cell Selection | No suitable cell found | Initial Cell Selection |

Suitable cell found

(2)

Suitable cell found

No suitable
cell found

| Cell Selection when leaving connected mode |

Suitable cell found

Camped normally

NAS indicates that
registration on selected
PLMN is rejected
(Except with cause #12,
#14 , #15 or #25 [5][16])

Return to
idle mode

Leave
idle mode

Trigger

Suitable
cell found

Connected
mode

| Cell Reselection Evaluation Process | No suitable cell found |

No acceptable cell found

Any Cell Selection

Go here when
no USIM in the UE

Acceptable cell found

USIM
inserted

| Cell Selection when leaving connected mode |

Acceptable cell found

Camped
on any cell

Suitable cell found

(2)

(1)

Return to
idle mode

Leave
idle mode

Trigger

Acceptable
cell found

Connected mode
(Emergency calls only)

| Cell Reselection Evaluation Process | No acceptable cell found |

EP 3 079 411 B1

# FIG. 5

| Select PLMN and RAT | ~S410 |

| Select initial cell | ~S420 |

Is network registration necessary? — No

Yes

| Register in network (NAS procedure) | ~S430 |

| Reselect cell | ~S440 |

Measure signal

Is new cell selected? — No / Yes

# FIG. 6

START

Receive cell reselection information — S451

Measure serving cell — S452

S453

Is $S_{intrasearch}$ is set and $S_{rxlev} > S_{intrasearch}$? — NO → Perform intra-frequency measurement — S453-1

YES

S454

Is $S_{non\text{-}intrasearch}$ is set and $S_{rxlev} > S_{non\text{-}intrasearch}$? — NO → Perform inter-frequency measurement in cell reselection information — S454-1

YES

Derive measurement result $S_{nonServingCell,x}$ — S455

S456

$S_{nonServingCell,x} > Thresh_{x,high}$ during $T_{reselectionRAT}$?

YES

Reselect neighboring cell — S457

END

# FIG. 7

# FIG. 8

# FIG. 9A

# FIG. 9B

START

Trigger cell selection procedure

Detect cell

Acquire broadcast information

Apply parameter for
specific category?

NO

YES

Evaluate cell selection criterion
by applying cell-common parameter

Evaluate cell selection criterion
by applying parameter
for specific category

END

# FIG. 9C

START

Idle state?

YES

Initiate cell reselection procedure

S302

NO    Apply parameter
for specific category?    YES

Evaluate cell reselection criterion
by applying cell-common parameter

Evaluate cell reselection criterion
by applying parameter
for specific category

END

# FIG. 10A

Qrxlevmeas=-110dBm
Qrxlevmin=-100dBm

# FIG. 10B

Qrxlevmeas=-110dBm
Qrxlevmin_category=-115dBm

# FIG. 11A

200-1

Cell 1

100

MCT device

Offset 6dBm
cell 2 is reselected

200-2

Cell 2

# FIG. 11B

200-1

100

200-2

Cell 1

MCT device

Cell 2

Offset 10 dBm
cell 2 is not reselected

EP 3 079 411 B1

# FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011319080 A1

- US 2013121309 A1

**Non-patent literature cited in the description**

- *3GPP TS 36.331 V8.7.0 (2009-09)*

- *3GPP TS 36.304 V8.8.0,* December 2009